# DEMANDE DE BREVET EUROPEEN

(11) **EP 1 894 690 A1**
(43) Date de publication de la demande: **05.03.2008**
(21) Numéro de dépôt: 06755339.6
(22) Date de dépôt: 16.05.2006
(51) Int. Cl.: B27H 3/04, B65D 43/02

(54) **FOND PERFECTIONNE POUR TONNEAUX**

(30) Priorité: 17.05.2005 ES 200501188 U
(71) Demandeur: Sotel, S.L., 26005 Logroño La Rioja (ES)
(72) Inventeur: GARCIA RODRIGUEZ, Victor, E-26005 Logroño (La Rioja) (ES)
(74) Mandataire: Munoz Garcia, Antonio
(86) Numéro de dépôt international: PCT/ES2006/000252
(87) Numéro de publication internationale: WO 2006/123000

(57) **Abrégé**

Fond amélioré pour barriques formées par des douves comme paroi et unies extérieurement par des anneaux de fixation, dont les fonds sont composés par un couvercle qui s'emboîte dans un cadre complémentaire qui à son tour est emboîté périmétriquement dans une gerçure interne des parois de la barrique. Le couvercle et le cadre disposant entre eux un échelonnement interne avec un joint d'étanchéité et des butées élastiques radiales qui stabiliseront le couvercle lors de sa fermeture. Le couvercle présente deux axes de différentes dimensions qui permettront son extraction de l'intérieur de la barrique, car le cadre emboîté dans la gerçure fait partie de la barrique et dispose d'une fenêtre complémentaire au couvercle, en obtenant une fermeture efficace et en permettant son inspection, nettoyage périodique ou ouverture simple avec facilité, en évitant le démontage pour cela de la barrique.

## Description

### Objet de l'invention

L'objet de la présente invention est un fond amélioré pour barriques, permettant la construction de barriques de manière que l'intérieur soit accessible sans devoir démonter la barrique.

La présente invention est caractérisée par la configuration et la conception spéciales des pièces et des éléments conformant le fond faisant l'objet de l'invention, en réussissant à faire que l'intérieur des barriques soit accessible sans affaiblir l'étanchéité et les propriétés dérivées de la propre nature des barriques.

Grâce au fond faisant l'objet de la présente invention on réussit à obtenir des barriques dans lesquelles le traitement de grillage intérieur, ainsi que le nettoyage interne périodique de celles-ci, peut être réalisé facilement, rapidement et économiquement, lesdites actions pouvant être réalisées par le propre propriétaire de la cave car ce n'est plus nécessaire de démonter les cercles du tonneau ou anneau de serrage.

Une autre conséquence dérivée des caractéristiques constructives du fond faisant l'objet de l'invention, est la possibilité d'utiliser différents types de matériaux dans sa construction même de combiner des matériaux, au moment de traiter le produit stocké, en pouvant le remplacer ou le varier facilement.

Grâce à l'emploi de ce type de fonds dans la construction de barriques, il est possible d'utiliser des douves de plus faible section car la barrique peut être utilisée en position verticale.

Par conséquent, la présente invention demeure dans le domaine industriel de la fabrication de barriques pour stockage de vins et analogues, et de manière plus particulière en ce qui concerne ses caractéristiques constructives, en ce centrant sur les « fonds ».

### Antécédents de l'invention

Les barriques employées pour le stockage de vins et produits analogues, sont réalisées en bois et de manière particulière en bois de chêne qui est chargé de fournir des caractéristiques déterminées au vin stocké en fonction de l'origine et du traitement du chêne.

Dans le procédé de fabrication des barriques on commence par la conversion des planches de chêne en douves avec les caractéristiques géométriques nécessaires pour conformer la paroi d'une barrique. Ensuite, on procède à la réalisation de la canne, moule de la mesure de la circonférence de la barrique qui indique le nombre de douves de chaque barrique. A la suite, on réalise la soumission et le grillage postérieur intérieur et extérieur, qui selon le goût des oenologues, le grillage est plus ou moins prolongé. A la suite, on étête la barrique et on met en place les fonds préalablement préparés. Le procédé d'étêtage consiste à préparer un sillon ou rainure ou gerçure où s'emboîtent les fonds.

Généralement les fonds des barriques demeurent fixés sur les sillons ou gerçures réalisés dans les douves des barriques, raison pour laquelle elles ne sont pas démontables, donc l'intérieur d'une barrique une fois fermée ne peut pas être inspecté, en obligeant au démontage des cercles métalliques du tonneau pour réaliser tout traitement interne, nettoyage, etc.

Ce manque de d'inspection de l'intérieur de la barrique une fois fermée, implique une série d'inconvénients, comme l'impossibilité de traitement de la barrique et son nettoyage interne périodique, une fois celle-ci fermée.

Dans le brevet ES 2220194 on décrit une machine pour le grillage horizontal de l'intérieur des barriques, tonneaux ou cuves en général. Dans le brevet ES 2216672 on décrit un système pour le nettoyage mécanique de l'intérieur des barriques, tandis que dans le brevet ES 2220196 on décrit une machine pour le grillage des barriques en bois.

Toutes ces machines décrites dans lesdits brevets présentent l'inconvénient de ne pas pouvoir réaliser ces actions une fois les barriques fermées sans ôter les fonds de celles-ci ou avant de les mettre en place, ce qui suppose une difficulté ajoutée à la complexité et le temps nécessaire pour réaliser lesdites actions.

Par conséquent, un objet de la présente invention est de développer un fond pour barrique, réussissant à faire que celle-ci puisse être inspectée et permettant l'accès à l'intérieur de la barrique pour son traitement et nettoyage.

En outre, grâce au fait de pouvoir accéder à l'intérieur des barriques, cela permettra l'utilisation de douves de plus faible section car cela permettra d'utiliser la barrique en position verticale. De la même manière, en maintenant les cadres fixes, il ne sera pas nécessaire de nettoyer la rainure ou gerçure où s'appuient les fonds, en pouvant utiliser un produit approprié et durable pour unir les cadres fixes, qui n'endommagent pas le produit stocké. Ce type de barriques à fond amélioré servant également à la fermentation du raisin.

### Description de l'invention

L'invention d'un fond amélioré pour barriques, consiste à un fond formé par deux pièces principalement, un cadre et un couvercle, ajustées entre elles, disposées sur un ou les deux fonds d'une barrique ; on emboîte parfaitement le couvercle dans un cadre échelonné, ledit cadre demeurant à son tour emboîté dans un sillon ou rainure « gerçure » réalisée sur la face interne des douves.

L'union entre le cadre du couvercle et le propre couvercle qui constituent un ou les deux fonds est réalisée grâce à la forme constructive complémentaire présentée par le cadre du couvercle et le propre couvercle, ladite union ajustée ayant un échelonnement dans lequel est disposé un joint de silicone, en obtenant de la sorte une fermeture étanche et ajustée. Pour obtenir la stabilité de ladite union, la périphérie supérieure interne du cadre incorpore un canal périphérique, où seront appuyées des butées élastiques radiales incorporées par le couvercle sur sa face périphérique externe opposée.

L'échelonnement du cadre est réalisé vers l'intérieur de telle manière que le couvercle ne puisse être déplacé que vers l'intérieur de la barrique, et au moyen d'une rotation appropriée pouvoir l'extraire par la zone la plus large du cadre. Une fois le couvercle mis en place, par son propre ajustage et encliquetage des butées élastiques entre le cadre et le couvercle, il demeurera stabilisé en formant le fond requis. Par la suite, avec son usage, la pression interne du produit stocké en son sein agira contre le couvercle, et favorisera suffisamment l'herméticité de la barrique.

Le cadre du fond peut être réalisé en un seul matériau ou en plusieurs, appropriés et résistants, qui n'endommagent pas le produit stocké en son sein. Par ailleurs, le couvercle permet également l'utilisation de différents types de matériaux dans sa composition pour traiter le produit stocké, aussi bien internement qu'extérieurement.

La forme géométrique de la fenêtre du cadre et du couvercle pourra être diverse, carré, elliptique, etc., en tout cas elle devra permettre l'extraction du couvercle d'une simple rotation, en cherchant la grande diagonale de la fenêtre du cadre et la petit longueur du couvercle.

De cette manière, les cadres pourront demeurer fixes aux parois de la barrique, en utilisant une silicone ou produit approprié qui n'endommage pas le produit stocké, car ledit élément d'union peut rester à demeure et ne plus être nécessaire de dégager les cadres incorporés pour son traitement interne, nettoyage, etc.

### Description des dessins

Pour compléter la suivante description et afin d'aider à une meilleure compréhension de ses caractéristiques, le présent mémoire descriptif est accompagné d'un jeu de plans dans les figures desquels, on a représenté de manière illustrative et non pas limitative les détails les plus significatifs de l'invention.

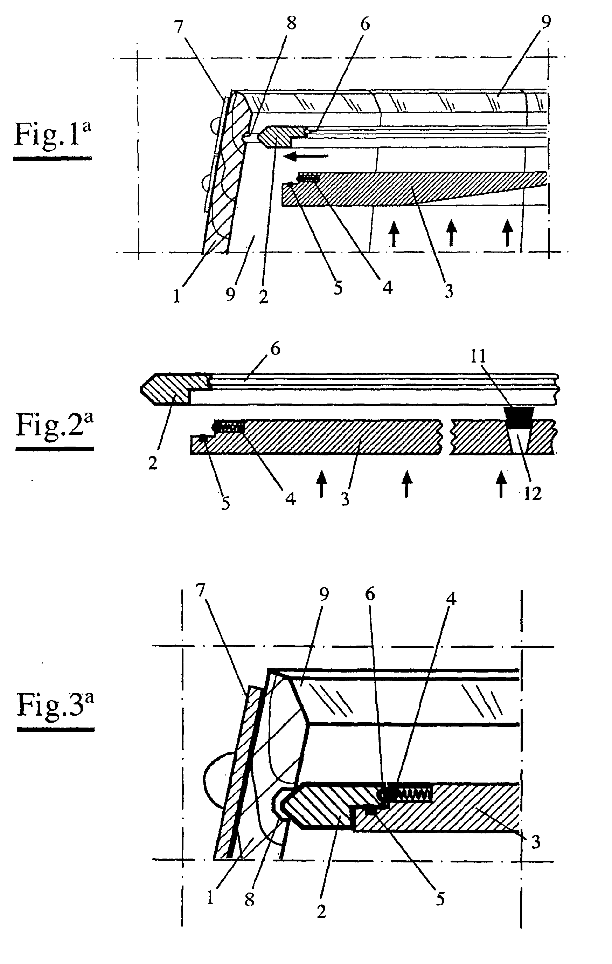

La figure 1 montre une partie de la section donnée à une barrique lors de la phase de montage, par un plan longitudinal, dans laquelle on observe en détail un des fonds de la barrique. On montre la manière dont doit être emboîté le cadre du fond dans le sillon des douves, ainsi que l'adaptation du couvercle sur la fenêtre du cadre en incorporant un système de fermeture stabilisateur composé de butées élastiques radiales situées sur la périphérie du couvercle, et qui s'emboîtent dans un canal externe de la périphérie de la fenêtre du cadre. Dans ce cas, on montre un couvercle pour utilisation verticale de la barrique, qui permettra d'aller de profiter davantage du volume interne de la barrique avec le produit stocké.

La figure 2 montre en détail une section du cadre et le couvercle opposés, un moment avant leur union, en reproduisant les éléments les plus importants de la présente invention. Cadre avec échelonnement interne, et avec un canal périphérique sur sa paroi verticale supérieure, qui doit s'emboîter dans la gerçure des douves, et couvercle à épaisseur uniforme et échelonnement complémentaire du cadre avec son joint d'étanchéité, des butées élastiques radiales d'ajustage, et un trou pour le bouchon en liège qui servira également à manipuler le couvercle.

La figure 3 montre en détail la manière dont le couvercle et le cadre demeurent parfaitement emboîtés et unis grâce à la collaboration des moyens d'ajustage, en constituant le fond prétendu avec la présente invention.

La figure 4, montre une section détaillée d'un fond complet d'une barrique par un plan longitudinal sur lequel on observe la manière dont le couvercle est emboîté sur le cadre et stabilisé grâce aux moyens d'ajustage du couvercle. Elle montre dans ce cas une barrique en position verticale, qui utilisera un couvercle approprié avec une conicité interne qui permettra de profiter davantage du volume interne de la barrique avec le produit stocké.

La figure 5, montre une vue en plan d'une barrique incorporant un cadre et un couvercle formant le fond caractéristique de cette invention.

La figure 6, montre une vue en plan du cadre du fond.

La figure 7, montre une vue en plan du couvercle qui accompagnera le cadre et constituera le fond. Dans celle-ci on a représenté quatre butées élastiques, mais on pourra en incorporé autant que nécessaires pour une plus grande sécurité de stabilisation du couvercle, soit pour son transport à vide soit pour sa manipulation.

La figure 8, montre une représentation verticale en perspective d'une barrique sur laquelle est disposé un fond de fermeture amélioré avec le cadre et le couvercle, et avec un bouchon en liège pour un accès réduit à l'intérieur de la barrique.

La figure 9, montre une vue en perspective du couvercle avec son trou traversant pour le bouchon en liège, et des butées radiales périphériques.

La figure 10, montre une vue en perspective d'une barrique en position horizontale reposant sur un coin, qui incorpore le fond caractéristique.

La figure 11, montre un détail d'un cadre monobloc.

La figure 12, montre un détail d'un cadre qui peut être constitué ou composé de différents matériaux, celui qui est à l'extérieur peut être de bois approprié, et celui de l'intérieur peut être en acier inoxydable ou même d'un autre type de bois.

### Mise en oeuvre préféré de l'invention

D'après les figures, on décrit à la suite un mode de mise en oeuvre préféré de l'invention proposée du fond amélioré pour des barriques.

Dans la figure 1, on observe la partie supérieure du corps d'une barrique (1), sur laquelle on a disposé des anneaux (7) de fixation des douves (9), qui forment le corps de la barrique.

Les anneaux (7) de fixation sont fabriqués de préférence en acier galvanisé.

En tant que fond de la barrique on observe un cadre (2) du couvercle (3). Le cadre (2) s'emboîtera dans le sillon ou rainure ou « gerçure » (8) réalise sur la face intérieure des douves (9).

Le cadre (2) présente sur le bord d'union avec le couvercle (3), un échelonnement vers l'intérieur, complémentaire de l'échelonnement que présente vers l'extérieur le couvercle (3). Le dit échelonnement est tel que l'on ne permet le déplacement du couvercle que vers l'intérieur de la barrique.

Dans l'union des deux échelonnements du cadre (2) et du couvercle (3) on dispose un joint (5) de silicone qui fournit de l'étanchéité à l'ensemble une fois celui-ci fermé.

Sur la face échelonnée verticale supérieure du couvercle (3) il y a des butées (4) élastiques radiales et périphériques qui s'encliquettent dans la rainure (6) externe périphérique de l'intérieur du cadre (2) qui réussiront à stabiliser le couvercle.

Dans la figure 2 on montre élargi et en solitaire le cadre (2) opposé au couvercle (3) à épaisseur uniforme, avec ses éléments d'étanchéité (5) et d'ajustage (4), accompagné du bouchon (11) en liège inséré dans le trou (12).

Dans la figure 3, on montre que le bord extérieur du cadre (2) demeure emboîté et logé dans le sillon ou rainure ou « gerçure » réalisé sur la face intérieure des douves (9). Par ailleurs, on observe également que le cadre (2) et le couvercle (3) sont unis en disposant dans l'union un joint (5) de silicone.

Dans cette figure, on observe que les butées (4) d'ajustage du couvercle (3) sont disposées de manière à pénétrer dans la rainure (6) du cadre (2).

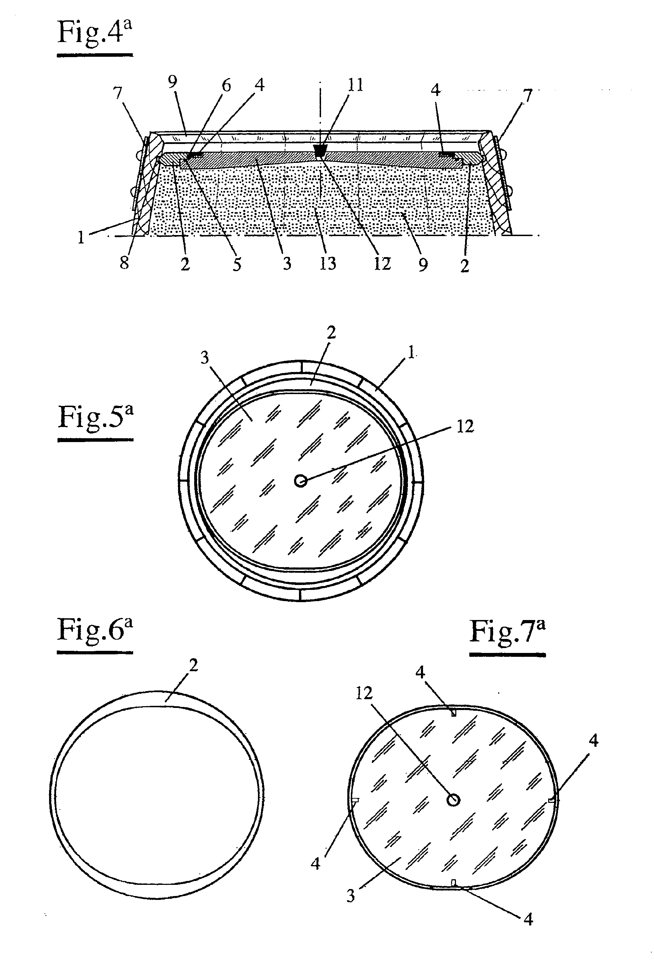

Dans la figure 4, on montre que l'on obtient la fermeture définitive du couvercle (3) contre le cadre (2) dans une barrique verticale en utilisant dans ce cas un couvercle à conicité interne pour profiter davantage du volume interne de la barrique.

Dans la figure 5, on voit en plan comment est disposé un fond dans la barrique (1).

Dans la figure 6, on observe en plan, un cadre (2) en solitaire qui présente une fenêtre interne à forme circulaire externe et quasi-elliptique qui permettra l'extraction du couvercle (3) complémentaire.

Dans la figure 7, on observe un couvercle (3) avec la même forme complémentaire de la fenêtre interne du cadre (2).

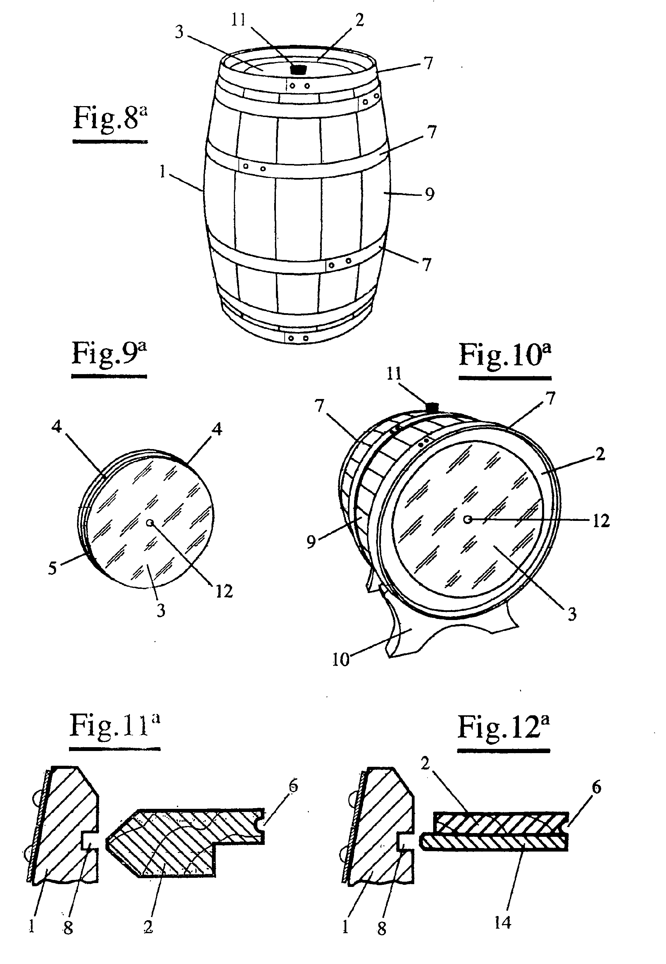

Dans la figure 8, on observe une barrique verticale qui permettra d'utiliser des douves à épaisseur plus faible.

Dans la figure 9, on observe un couvercle (3) en perspective avec ses butées (4) radiales, qui sera utilisé dans la barrique horizontale de la figure 10.

Finalement dans les figures 11 et 12, on montre deux manières de pouvoir constituer le cadre (2), monobloc et constitué de deux matériaux différents.

Cette description n'est pas plus étendue car tout expert en la matière aura suffisamment d'information pour comprendre la portée de l'invention et ses avantages dérivés, ainsi que pour procéder à la reproduire.

L'invention, dans l'essentiel, peut être mise en pratique sous d'autres formes de mise en oeuvre qui diffèrent en détail de celle indiquée à titre d'exemple de la description, et laquelle recevra également la protection revendiquée. Egalement, elle pourra être construite en toute forme et dimensions avec les matériaux les plus adéquats, car tout cela demeure compris dans l'esprit des revendications.

## Revendications

1. Fond amélioré pour barriques, du type qui sont conformées par une série de douves (9) qui composent la paroi, unies extérieurement par des anneaux (7) de fixation en incorporant des fonds à leurs bases, **caractérisé en ce qu'**au moins un des fonds est composé par un couvercle (3) qui s'emboîte internement dans un cadre (2) complémentaire, le périmètre externe du cadre (2) étant à son tour emboîté dans la gerçure (8) du corps interne de la barrique (1).

2. Fond amélioré pour barriques, selon la revendication 1, **caractérisé en ce que** les moyens d'emboîtement du cadre (2) sur le couvercle (3) consistent en un échelonnement opposé et complémentaire réalisé vers l'intérieur dans le périmètre interne de la fenêtre du cadre (2), y d'un échelonnement réalisé vers l'extérieur sur le bord externe du couvercle (3), en disposant entre les deux un joint (5) d'étanchéité situé sur l'échelon du couvercle (3).

3. Fond amélioré pour barriques, selon la revendication 1 et 2, **caractérisé en ce que** le couvercle (3) incorpore des butées (4) élastiques périmétriques radiales d'ajustage qui seront logées dans la rainure (6) du cadre (2) en obtenant la stabilisation du couvercle (3).

4. Fond amélioré pour barriques, selon les revendications antérieures, **caractérisé en ce que** le couvercle (3) et la fenêtre du cadre (2) présentent des formes complémentaires avec des axes différents, qui permettent l'extraction du couvercle (3) à travers l'intérieur de la fenêtre du cadre (2).
